# EUROPEAN PATENT APPLICATION

(11) **EP 1 775 879 A2**
(43) Date of publication of application: **18.04.2007**
(21) Application number: 06120231.3
(22) Date of filing: 06.09.2006
(51) Int. Cl.: H04L 9/08, H04L 9/30

(54) **Method and Apparatus for Securely Transmitting and Receiving Data in Peer-to-Peer Manner**

(30) Priority: 09.09.2005 KR 20050084305
(71) Applicant: SAMSUNG ELECTRONICS CO., LTD., Suwon-si, Gyeonggi-do (KR)
(72) Inventor: Kwak, Ki-won, Seongnam-si (KR); Kang, Chun-un, Seoul (KR); Jung, Min-woo, Seoul (KR)
(74) Representative: Waddington, Richard

(57) **Abstract**

A method and apparatus for securely transmitting data between embedded devices are provided. The method includes: issuing a request for a session key that is to be used in a session with the device; restoring the session key by deciphering a ciphered session key included in a response to the request; ciphering data using the restored session key; and transmitting the ciphered data. Accordingly, it is possible to enable embedded devices to securely communicate with one another in a peer-to-peer manner.

## Description

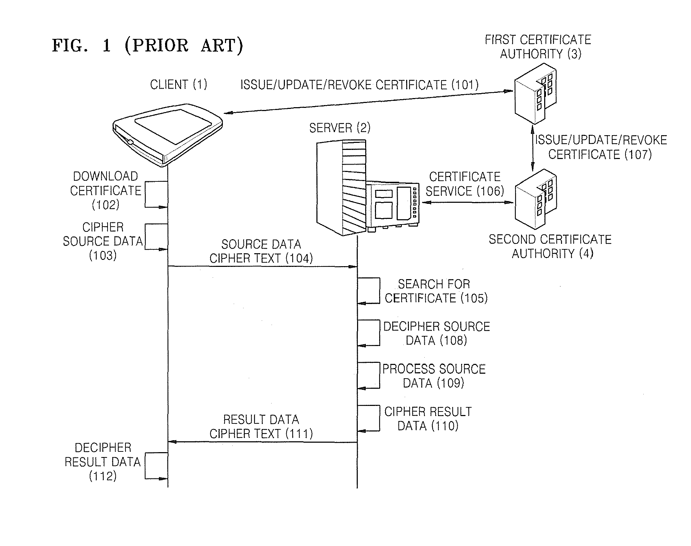

FIG. 1 is a flowchart illustrating a conventional data security method. Referring to FIG. 1, in operation 101, a first certificate authority 3 issues a certificate to a client 1 or updates or revokes the certificate issued to the client 1 through a path that is not exposed externally. In operation 102, the client 1 downloads the certificate issued or updated (in operation 101) from the certificate authority 3. In operation 103, the client 1 ciphers source data using a public key which was included in the downloaded certificate. In operation 104, the client 1 transmits source data cipher text comprising the ciphered source data to a server 2, and the server 2 receives the source data cipher text.
In operation 105, the server 2 searches a database for a certificate comprising a private key needed for deciphering the ciphered source data included in the source data cipher text. In operation 106, if a certificate comprising a private key needed for deciphering the ciphered source data does not exist in the database, the server 2 issues a request for a certification service to a second certificate authority 4 and provides the first certificate authority 3 with a certification service by transmitting the certificate issued by the first certificate authority 3 to the first certificate authority 3 along a path that is not exposed externally.

In operation 107, the second certificate authority 4 issues a request for a certificate to be issued to the first certificate authority 3 in response to the request issued by the server 2 in operation 106, and the first certificate authority 3 issues a certificate to the second certificate authority 4 along a path that is not exposed externally in response to the request issued by the second certificate authority 4.

In operation 108, the server 2 restores source data by deciphering the ciphered source data using a private key included in a found certificate or in the certificate issued in operation 107. In operation 109, the server 2 processes the restored source data. In operation 110, the server 2 ciphers the processed source data using a public key included in a certificate found in operation 105 or in the certificate issued in operation 107, thereby generating ciphered result data. In operation 111, the server 2 transmits result data cipher text comprising the ciphered result data to the client 1, and the client 1 receives the result data cipher text.

In operation 112, the client 1 restores result data by deciphering the ciphered result data included in the result data cipher text using a private key included in the downloaded certificate.

As described above, conventionally, data is ciphered or deciphered using an asymmetric key pair comprising a public key and a private key in order to enhance the security of the data. However, asymmetric key pair cipher algorithms are very complicated and require high-performance cipher systems. Accordingly, it is difficult to apply such conventional data security techniques to low-performance embedded devices.

Recently, data cipher/decipher methods in which symmetric keys are shared between devices based on an asymmetric key pair algorithm and data is ciphered or deciphered using the symmetric keys have been suggested. However, these data cipher/decipher methods also require certificate authorities which can securely distribute asymmetric key pairs because the data cipher/decipher methods involve ciphering/deciphering symmetric keys, operations of which are similar to operations 101 through 112 illustrated in FIG. 1. Therefore, it is also difficult to apply the data cipher/decipher methods to embedded devices which cannot be connected to certificate authorities and communicate with one another in a peer-to-peer manner.

The present invention provides a method and apparatus for securely transmitting data between embedded devices which communicate with one another in a peer-to-peer manner.

The present invention provides a computer-readable recording medium storing a computer program for executing the method of securely transmitting data between embedded devices which communicate with one another in a peer-to-peer manner.

According to the present invention there is provided an apparatus and method as set forth in the appended claims. Preferred features of the invention will be apparent from the dependent claims, and the description which follows.

According to an aspect of the present invention, there is provided a method of securely transmitting data to a device. The method includes: issuing a request for a session key that is to be used in a session with the device; restoring the session key by deciphering a ciphered session key included in a response to the request; ciphering data using the restored session key; and transmitting the ciphered data.

According to another aspect of the present invention, there is provided an apparatus for securely transmitting data to a device. The apparatus includes: a transmission unit which is operable to transmit a request token that requests a session key to be used in a session with the device; a first decipher unit which is operable to restore the session key by deciphering a ciphered session key included in a response token corresponding to the request token; and a cipher unit which is operable to cipher data using the restored session key, wherein the transmission unit transmits the ciphered data.

According to another aspect of the present invention, there is provided a computer-readable recording medium storing a computer program for executing a method of securely transmitting data to a device, the method including: issuing to the device a request for a session key that is to be used in a session with the device; restoring the session key by deciphering a ciphered session key included in a response to the request; ciphering data using the restored session key; and transmitting the ciphered data.

According to another aspect of the present invention, there is provided a method of securely receiving data from a device. The method includes: receiving a request for a session key that is to be used in a session with the device; transmitting a ciphered session key in response to the request; and receiving ciphered data which is ciphered with the session key restored from the ciphered session key.

According to another aspect of the present invention, there is provided an apparatus for securely receiving data from a device. The apparatus includes: a reception unit which is operable to receive a request token that requests a session key that is to be used in a session with the device; and a transmission unit which is operable to transmit a response token comprising a ciphered session key in response to the request token, wherein the reception unit is operable to receive cipher text comprising ciphered data which is ciphered with the session key restored from the ciphered session key included in the response token.

According to another aspect of the present invention, there is provided a computer-readable recording medium storing a computer program for executing a method of securely receiving data from a device, the method including: receiving a request for a session key that is to be used in a session with the device; transmitting a ciphered session key in response to the request; and receiving ciphered data which is ciphered with the session key restored from the ciphered session key.

Any of the features described herein may be combined with any of the above aspects in any combination.

For a better understanding of the invention, and to show how embodiments of the same may be carried into effect, reference will now be made, by way of example, to the accompanying diagrammatic drawings in which:
FIG. 1 is a flowchart illustrating a conventional data security method;
FIG. 2 is a flowchart illustrating a method of securely transmitting and receiving data according to an exemplary embodiment of the present invention;
FIG. 3 is a block diagram of a first device according to an exemplary embodiment of the present invention;
FIG. 4 is a diagram illustrating the format of an asymmetric key pair data block according to an exemplary embodiment of the present invention;
FIG. 5 is a diagram illustrating the format of a session key request token according to an exemplary embodiment of the present invention;
FIG. 6 is a diagram illustrating the format of a session key data block which is used by a first device according to an exemplary embodiment of the present invention;
FIG. 7 is a diagram illustrating the format of source data cipher text according to an exemplary embodiment of the present invention;
FIG. 8 is a block diagram of a second device according to an exemplary embodiment of the present invention;
FIG. 9 is a diagram illustrating the format of a session key data block which is used by the second device according to an exemplary embodiment of the present invention;
FIG. 10 is a diagram illustrating the format of a session key response token according to an exemplary embodiment of the present invention;
FIG. 11 is a diagram illustrating the format of source data cipher text according to another exemplary embodiment of the present invention;
FIG. 12 is a flowchart illustrating a method of securely transmitting data according to an exemplary embodiment of the present invention;
FIGS. 13A and 13B are flowcharts illustrating a method of securely transmitting data according to another exemplary embodiment of the present invention.

The present invention will now be described more fully with reference to the accompanying drawings in which exemplary embodiments of the invention are shown.

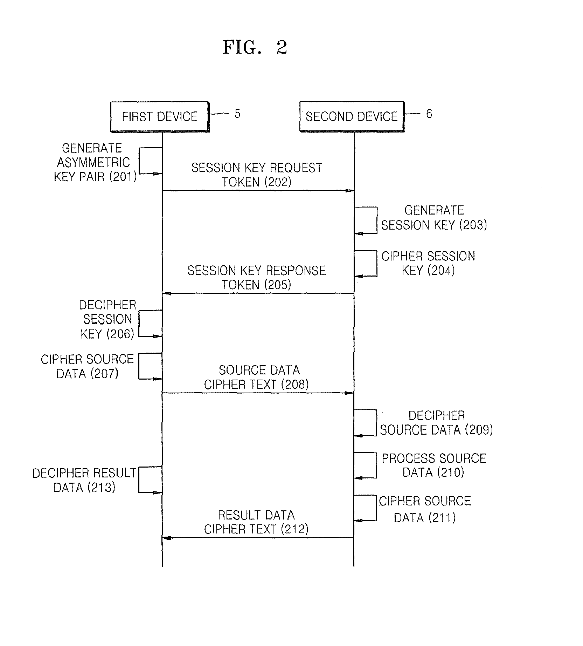

FIG. 2 is a flowchart illustrating a method of securely transmitting and receiving data according to an exemplary embodiment of the present invention. Referring to FIG. 2, in operation 201, a first device 5 generates an asymmetric key pair. According to the current exemplary embodiment of the present invention, if the first device 5 already possesses an appropriate asymmetric key pair, then it may directly use this asymmetric key pair instead of generating a new asymmetric key pair in operation 201.

In operation 202, the first device 5 transmits to a second device 6 a session key request token that requests a session key to be used in a session between the first device 5 and the second device 6, and the second device 6 receives the session key request token transmitted by the first device 5. According to the current exemplary embodiment of the present invention, the session key to be used in the session between the first device 5 and the second device 6 is a symmetric key. The session key request token transmitted by the first device 5 comprises a public key of the asymmetric key pair generated by the first device 5.

In operation 203, the second device 6 generates a session key in response to the session key request token transmitted by the first device 5. According to the current exemplary embodiment of the present invention, if the second device 6 already possesses an appropriate session key, then the second device 6 may directly use the possessed appropriate session key instead of generating a new session key in operation 203.

In operation 204, the second device 6 ciphers the session key generated in operation 203 using a public key included in the session key request token transmitted by the first device 5.

In operation 205, the second device 6 transmits a session key response token to the first device 5 in response to the session key request token transmitted by the first device 5, and the first device 5 receives the session key response token transmitted by the second device 6. The session key response token transmitted by the second device 6 comprises the ciphered session key obtained by the second device 6 in operation 204.

In operation 206, the first device 5 deciphers the ciphered session key included in the session key response token transmitted by the second device 6 using a private key of the asymmetric key pair generated by the first device 5, thereby restoring the session key to be used in the session between the first device 5 and the second device 6.

Operations 201 through 206 are carried out for sharing a session key between the first device 5 and the second device 6 based on an asymmetric key algorithm. According to the current exemplary embodiment of the present invention, the first device 5 can securely share a session key with the second device 6 by simply transmitting a public key which can be safely exposed externally to the second device 6. In other words, the second device 6 does not need the private key of the asymmetric key pair generated by the first device 5 to share a session key of the first device 5. As a result, it is possible to make embedded devices communicate with one another in a peer-to-peer manner without the need to obtain a private key from a certificate authority equipped with a centralized security server via a path that is not exposed externally.

In operation 207, the first device 5 ciphers source data to be transmitted to the second device 6 using the session key restored in operation 206.

In operation 208, the first device 5 transmits source data cipher text comprising the ciphered source data to the second device 6, and the second device 6 receives the source data cipher text transmitted by the first device 5.

In operation 209, the second device 6 restores source data by deciphering the ciphered source data included in the source data cipher text transmitted by the first device 5 using the session key generated by the second device 6.

In operation 210, the second device 6 processes the restored source data.

In operation 211, the second device 6 ciphers the processed source data using the session key used in operation 209, thereby generating ciphered result data.

In operation 212, the second device 6 transmits result data cipher text comprising the ciphered result to the first device 5, and the first device 5 receives the result data cipher text.

In operation 213, the first device 5 restores result data by deciphering the ciphered result data included in the result data cipher text using the session key restored in operation 206.

Operations 207 through 213 are performed for safely transmitting data between the first device 5 and the second device 6. Even though the method of FIG. 2 has been described as involving only a single operation of transmitting data between the first device 5 and the second device 6, according to an exemplary embodiment of the present invention the first device 5 and the second device 6 may transmit data to and receive data from each other more than once using the session key shared therebetween.

According to the current exemplary embodiment of the present invention, the first device 5 and the second device 6 initially use an asymmetric key algorithm for sharing a session key with each other and then use a symmetric key algorithm for transmitting data to and receiving data from each other. Therefore, it is possible to minimize the data security maintenance load of a system because a symmetric key algorithm is much simpler and, thus, places less of a burden on a system than an asymmetric key algorithm.

As described above, operations 201 through 203 are performed by two embedded devices without the aid of a certificate authority, and thus, the method of FIG. 2 can be freely performed in embedded devices without regard to restrictions imposed externally by a certificate authority.

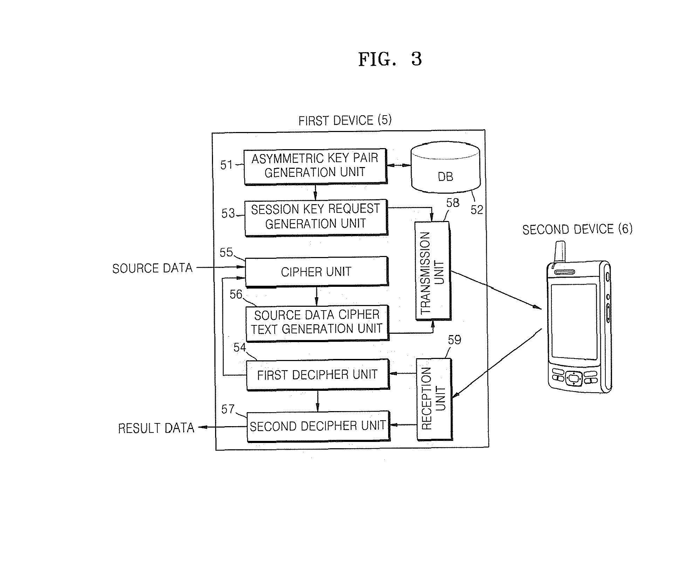

FIG. 3 is a block diagram of a first device 5 according to an exemplary embodiment of the present invention. Referring to FIG. 3, the first device 5 includes an asymmetric key pair generation unit 51, a database 52, a session key request token generation unit 53, a first decipher unit 54, a cipher unit 55, a source data cipher text generation unit 56, a second decipher unit 57, a transmission unit 58, and a reception unit 59.

The asymmetric key pair generation unit 51 generates an asymmetric key pair comprising a public key and a private key. The asymmetric key pair and information regarding the asymmetric key pair are stored in the database 52. The asymmetric key pair is allowed to be used only for a predetermined time period after the generation of the asymmetric key pair, and the predetermined time period is referred to as a validity period of the asymmetric key pair. By regulating the use of the asymmetric key pair in this manner, the possibility of the asymmetric key pair being accidentally exposed externally can be reduced.

In detail, the asymmetric key pair generation unit 51 examines a plurality of asymmetric key pairs stored in the database 52 and determines whether each of the asymmetric key pairs stored in the database 52 is valid. Thereafter, the asymmetric key pair generation unit 51 extracts from the database 52 an asymmetric key pair that is determined to be valid. On the other hand, if none of the asymmetric key pairs stored in the database 52 are determined to be valid, the asymmetric key pair generation unit 51 generates a new asymmetric key pair.

The database 52 stores a plurality of asymmetric key pairs and a plurality of pieces of asymmetric key pair information regarding respective asymmetric key pairs. In particular, the database 52 stores the asymmetric key pairs and the plurality of pieces of asymmetric key pair information in units of asymmetric key pair data blocks. Examples of the asymmetric key pair information that is stored in the database 52 may comprise, for instance, information specifying the validity period of an asymmetric key pair, which is defined by a predetermined start time and a predetermined end time.

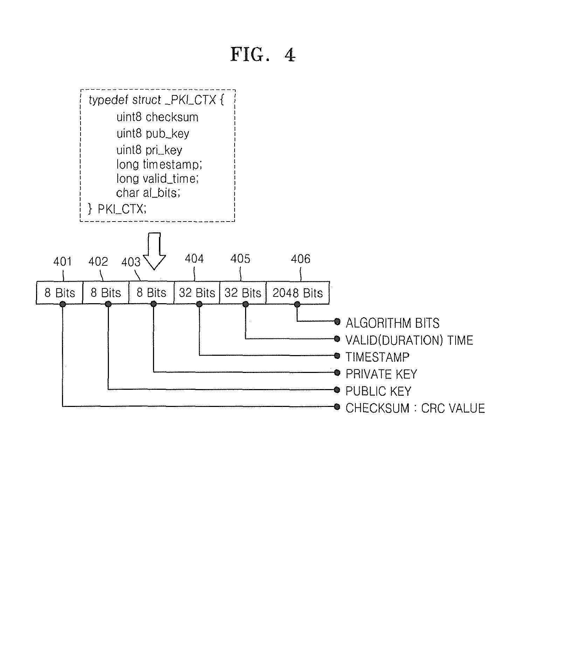

FIG. 4 is a diagram illustrating the format of an asymmetric key pair data block according to an exemplary embodiment of the present invention. Referring to FIG. 4, the asymmetric key pair data block comprises a checksum field 401, a public key field 402, a private key field 403, a timestamp field 404, a validity period field 405, and an algorithm bit field 406. The asymmetric key pair data block may be defined, for example, using the C language as illustrated in FIG. 4.

A checksum value of an asymmetric key pair is recorded in the checksum field 401. The checksum field 401 is used for determining whether the asymmetric key pair has been deformed before transmitting the asymmetric key pair from a first device 5 to a second device 6. A public key value, which is a value regarding a public key in the asymmetric key pair, is recorded in the public key field 402. A private key value, which is a value regarding a private key in the asymmetric key pair, is recorded in the private key field 403. A start time of the validity period of the asymmetric key pair is recorded in the timestamp field 404. An end time of the validity period of the asymmetric key pair is recorded in the validity period field 405. The size in bits of data blocks that can be processed using a predetermined asymmetric key cipher algorithm is recorded in the algorithm bit field 406. In general, the size in bits of data blocks may vary from one cipher algorithm to another, and thus, a value recorded in the algorithm bit field 406 may be used for identifying the type of cipher algorithm.

Referring to FIG. 3, the session key request token generation unit 53 generates a session key request token that requests a session key to be used in a session between the first device 5 and the second device 6. In detail, the session key request token generation unit 53 generates a session key request token comprising a public key in an asymmetric key pair found in the database 52 by the asymmetric key pair generation unit 51, or a public key in the asymmetric key pair which is generated by the asymmetric key pair generation unit 51. The public key included in the session key request token is used by the second device 5 to cipher a session key.

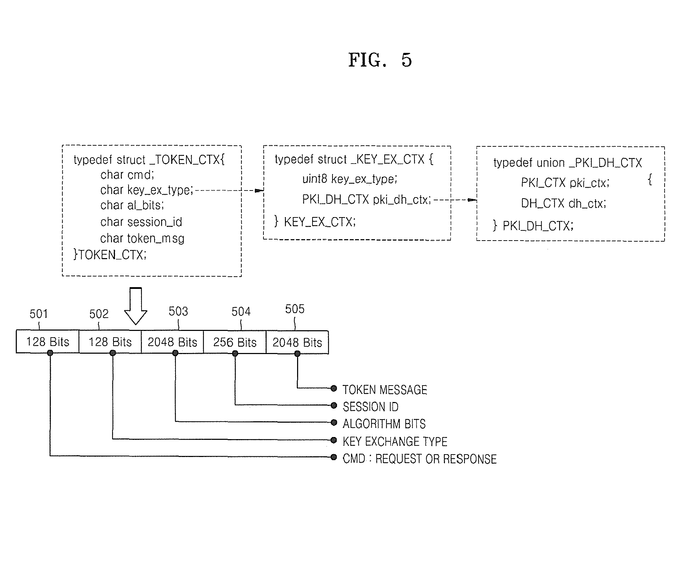

FIG. 5 is a diagram illustrating the format of a session key request token according to an exemplary embodiment of the present invention. Referring to FIG. 5, the session key request token includes a command field 501, a key exchange type field 502, an algorithm bit field 503, a session identifier field 504, and a token message field 505. The session key request token may be defined, for example, using the C language as illustrated in FIG. 5.

A command value of a token transmitted from a first device 5 to a second device 6 during a session between the first device 5 and the second device 6, i.e., a value indicating whether the token is for issuing a request to the second device 6 or a token for responding to a request issued by the second device 6, is recorded in the command field 501. Since, in this example, the session key request token is a token for issuing a request to the second device 6, a value indicating that the session key request token is for issuing a request to the second device 6 is recorded in the command field 501.

A value identifying an asymmetric key cipher algorithm used to exchange a public key between the first device 5 and the second device 6, i.e., a value indicating whether a public key infrastructure (PKI) algorithm or a Diffie Hellman (DH) algorithm is used to exchange a public key between the first device 5 and the second device 6, is recorded in the key exchange type field 502. The key exchange type field 502 may be defined, for example, using the C language as illustrated in FIG. 5, and comprises: a field key_ex_type in which the value indicating whether the public key infrastructure (PKI) algorithm or the Diffie Hellman algorithm is used to exchange a public key between the first device 5 and the second device 6 is recorded; and a field PKI_DH_CTX in which information specifying how, in the PKI algorithm or the DH algorithm, a public key is exchanged between the first device 5 and the second device 6 is recorded. The field PKI_DH_CTX may be defined using the C language, for example, as illustrated in FIG. 5, and comprises a field PKI_CTX field in which information specifying how, in the PKI algorithm, a public key is exchanged between the first device 5 and the second device 6 is recorded, and a field DH_CTX field in which information specifying how, in the DH algorithm, a public key is exchanged between the first device 5 and the second device 6 is recorded.

The size in bits of data blocks that can be processed using the asymmetric key cipher algorithm identified by the value of the key exchange type field 502 is recorded in the algorithm bit field 503. A session identifier of the session between the first device 5 and the second device 6 is recorded in the session identifier field 504. A token message, which is a message actually needed to be transmitted from the first device 5 to the second device 6 by being carried by the session key request token, is recorded in the token message field 505. According to the current exemplary embodiment of the present invention, a public key which is to be used by the second device 6 to cipher a session key is recorded in the token message field 505 as a token message.

Referring to FIG. 3, the first decipher unit 54 deciphers a ciphered session key included in a session key response token received by the reception unit 59 with a private key corresponding to the public key included in a token message field 505 of a session key request token according to a symmetric key cipher algorithm identified by the values of a key exchange field and an algorithm bit field of the session key response token, thereby restoring a session key corresponding to a predetermined session identifier that identifies a session between the first device 5 and the second device 6. In detail, the first decipher unit 54 restores a session key corresponding to the predetermined session identifier by deciphering a ciphered session key included in a token message 1005 of a session key response token received by the reception unit 59 according to an asymmetric key cipher algorithm identified by the values of a key exchange field 1002 and an algorithm bit field 1003 of the session key response token.

Information regarding the session key restored by the first decipher unit 54 and information regarding the session identified by the predetermined session identifier are stored in the database 52. The database 52 may store a plurality of session keys and session key information regarding the respective session keys in units of session key data blocks. If the first device 5 shares a session key with more than one device, then as many data blocks as there are devices with which the first device 5 currently shares a session key may exist in the database 52. Examples of the session key information stored in the database 52 may include, for example, information specifying the validity period of a session key, which is defined by a predetermined start time and a predetermined end time.

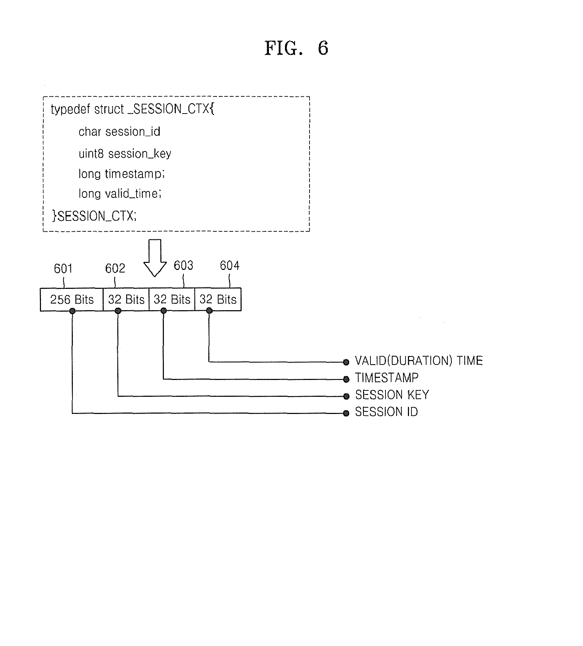

FIG. 6 is a diagram illustrating the format of a session key data block which is used by a first device 5 according to an exemplary embodiment of the present invention. Referring to FIG. 6, the session key data block comprises a session identifier field 601, a session key field 602, a timestamp field 603, and a validity period field 604. The session key data block may be defined, for example, using the C language as illustrated in FIG. 6.

A session identifier of a session between a first device 5 and a second device 6 is recorded in the session identifier field 601. A session key corresponding to the session identifier recorded in the session identifier field 601 is stored in the session key field 602. A start time of a validity period of the session key is recorded in the timestamp field 603. An end time of the validity period of the session key is recorded in the validity period field 604.

Referring to FIG. 3, the cipher unit 55 ciphers source data to be transmitted from the first device 5 to the second device 6 with the session key restored by the first decipher unit 54. In detail, if there is source data that needs to be transmitted from the first device 5 to the second device 6, then the cipher unit 55 searches the database 52 for a predetermined session key that is to be used in a session between the first device 5 and the second device 6.

If a predetermined session key is found in the database 52, then it is determined whether the found session key is valid. However, if a predetermined session key does not exist in the database 52, then the cipher unit 55 issues a request for generation of a new session key request token to the session key request token generation unit 53. If the found session key is determined not to have expired, then the cipher unit 55 ciphers the source data with the found session key. However, if the found session key is determined to have expired, then the cipher unit 55 issues a request for generation of a new session key request token to the session key request token generation unit 53.

The source data cipher text generation unit 56 generates source data cipher text comprising the ciphered source data provided by the cipher unit 55.

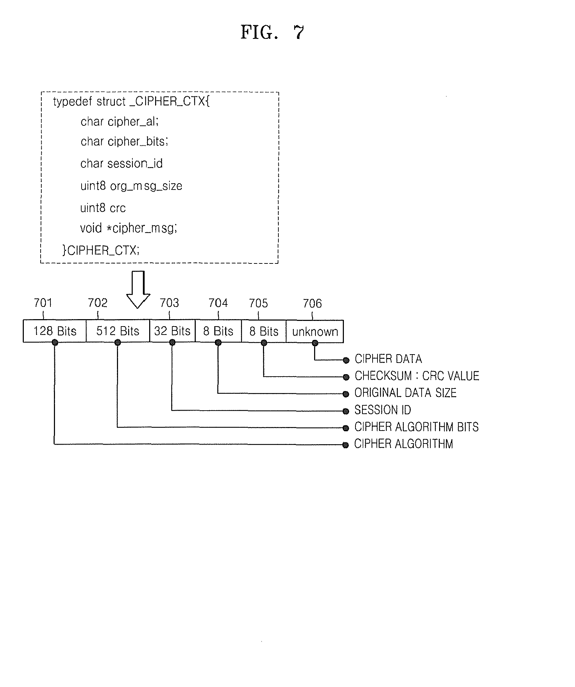

FIG. 7 is a diagram illustrating the format of source data cipher text according to an exemplary embodiment of the present invention. Referring to FIG. 7, the source data cipher text comprises an cipher algorithm field 701, an cipher algorithm bit field 702, a session identifier field 703, an original data size field 704, a checksum field 705, and a ciphered data field 706. The source data cipher text may be defined, for example, using the C language as illustrated in FIG. 7.

A value identifying a symmetric key cipher algorithm used for ciphering source data, e.g., a value indicating whether the source data has been ciphered using a data cipher standard (DES) algorithm, is recorded in the cipher algorithm field 701. The size in bits of data blocks that can be processed using the symmetric key cipher algorithm identified by the value of the cipher algorithm field 701 is recorded in the cipher algorithm bit field 702. A session identifier of a session between a first device 5 and a second device 6 is recorded in the session identifier field 703. The size in bits of the original source data which is yet to be ciphered by a cipher unit 55 of the first device 5 is recorded in the original data size field 704. The original data size field 704 is used later for determining whether the second device 6 has successfully restored the original source data. A checksum value of a session key is recorded in the checksum field 705. The checksum field 705 is used for determining whether the session key has been deformed before transmitting the session key from the first device 5 to the second device 6. Ciphered source data that is needed to be transmitted from the first device 5 to the second device 6 by being carried by the source data cipher text is recorded in the ciphered data field 706.

Referring to FIG. 3, the second decipher unit 57 restores result data by deciphering ciphered result data, included in result data cipher text received by the reception unit 59, with the session key restored by the first decipher unit 54. The result data restored by the second decipher unit 57 is a result of processing source data by the second device 6 in response to a request for processing the source data issued by the first device 5 as a client.

In detail, the second decipher unit 57 deciphers ciphered data included in a ciphered data field 1106 of result data cipher text with a session key corresponding to a session identifier recorded in a session identifier field 1103 of the result data cipher text according to a cipher algorithm identified by the values of a cipher algorithm field 1101 and a cipher algorithm bit field 1102 of the result data cipher text, and determines whether original data corresponding to the ciphered data has been successfully restored with reference to the values of an original data size field 1104 and a checksum field 1105 of the result data cipher text.

The transmission unit 58 transmits the session key request token generated by the session key request token generation unit 53 to the second device 6. Also, the transmission unit 58 transmits the source data cipher text generated by the cipher text generation unit 56 to the second device 6.

The reception unit 59 receives a session key response token corresponding to the session key request token transmitted by the transmission unit 58. Also, the reception unit 59 receives result data cipher text comprising ciphered result data which is obtained by the second device 6 processing the source data included in the source data cipher text transmitted by the transmission unit 58.

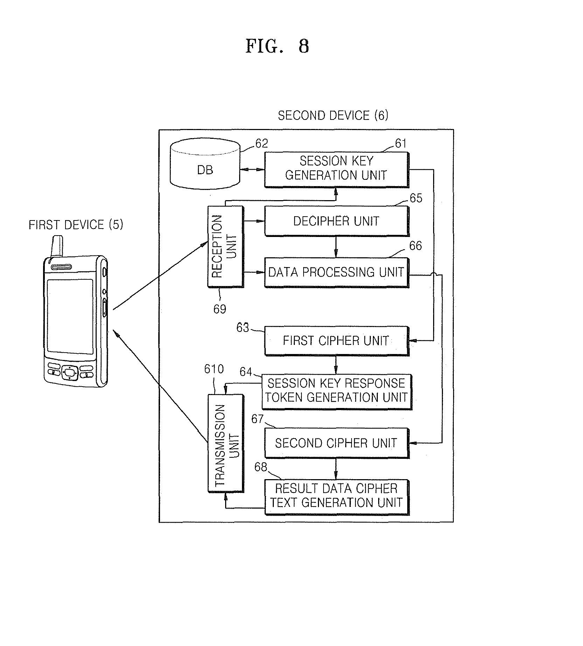

FIG. 8 is a block diagram of a second device 6 according to an exemplary embodiment of the present invention. Referring to FIG. 8, the second device 6 includes a session key generation unit 61, a database 62, a first cipher unit 63, a session key response token generation unit 64, a decipher unit 65, a data processing unit 66, a second cipher unit 67, a result data cipher text generation unit 68, a reception unit 69, and a transmission unit 610.

The session key generation unit 61 generates a session key to be used in a session between the second device 6 and a first device 5 in response to a session key request token received by the reception unit 69. In detail, the session key generation unit 61 generates a session key corresponding to a session identifier recorded in the session key identifier field 502, illustrated in FIG. 5, of the session key request token.

The session key and session key information regarding the session key are stored in the database 62. The session key is allowed to be used only for a predetermined time period after the generation of the session key, and the predetermined time period is referred to as a validity period of the session key. By regulating the use of the session key in this manner, the possibility of the session key being accidentally exposed externally can be reduced.

In detail, in response to the session key request token, the session key generation unit 61 searches the database 62 for a session key corresponding to the session identifier recorded in the session identifier 502 of the session key request token. If a session key corresponding to the session identifier recorded in the session identifier 502 of the session key request token is found in the database 62, then the session key generation unit 61 determines whether the found session key is valid. If the found session key is determined to be valid, i.e., the found session key has not yet expired, then the session key generation unit 61 extracts the found session key from the database 62. If a session key corresponding to the session identifier recorded in the session identifier 502 of the session key request token does not exist in the database 62, or if a session key corresponding to the session identifier recorded in the session identifier 502 of the session key request token is found in the database 62 but the found session key has already expired, and is thus invalid, then the session key generation unit 61 generates a new session key.

The database 62 stores a plurality of session keys and a plurality of pieces of session key information regarding the respective session keys. The database 62 may store the session keys and the respective pieces of session key information in units of session key blocks. Examples of the session key information may include, but are not limited to, information specifying a validity period of a session key, which is defined by a predetermined start time and a predetermined end time.

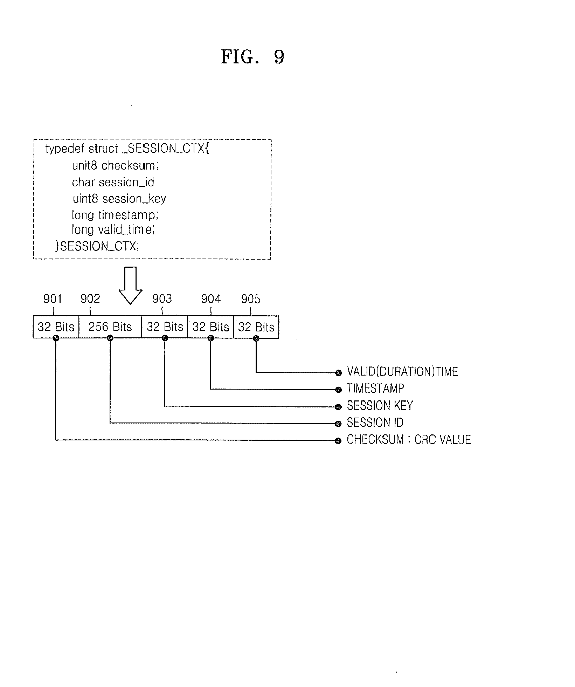

FIG. 9 is a diagram illustrating the format of a session key data block that is used by the second device 6 according to an exemplary embodiment of the present invention. Referring to FIG. 9, the session key data block comprises a checksum field 901, a session identifier field 902, a session key field 903, a timestamp field 904, and a validity period field 905. The session key data block may be defined, for example, using the C language as illustrated in FIG. 9.

A checksum value of a session key is recorded in the checksum field 901. The checksum value is used for determining whether the session key has been deformed before transmitting the session key from the second device 6 to the first device 5. A session identifier of a session between the second device 6 and the first device 5 is recorded in the session identifier field 902. The session key, which corresponds to the session identifier recorded in the session identifier field 902, is stored in the session key field 903. A start time of a validity period of the session key is recorded in the timestamp field 904. An end time of the validity period of the session key is recorded in the validity period field 905.

Referring to FIG. 8, the first cipher unit 63 ciphers the session key generated by the session key generation unit 61 according to an asymmetric key cipher algorithm identified by the values of the key exchange type field 502 and the algorithm bit field 503, illustrated in FIG. 5, of the session key request token received by the reception unit 69. In detail, the first cipher unit 63 ciphers the session key generated by the session key generation unit 61 with a public key stored in the token message 505, illustrated in FIG. 5, of the session key request token received by the reception unit 69.

The session key response token generation unit 64 generates a session key response token corresponding to the session key request token received by the reception unit 69. In detail, the session key response token generation unit 64 generates a session key response token comprising the session key ciphered by the first cipher unit 63.

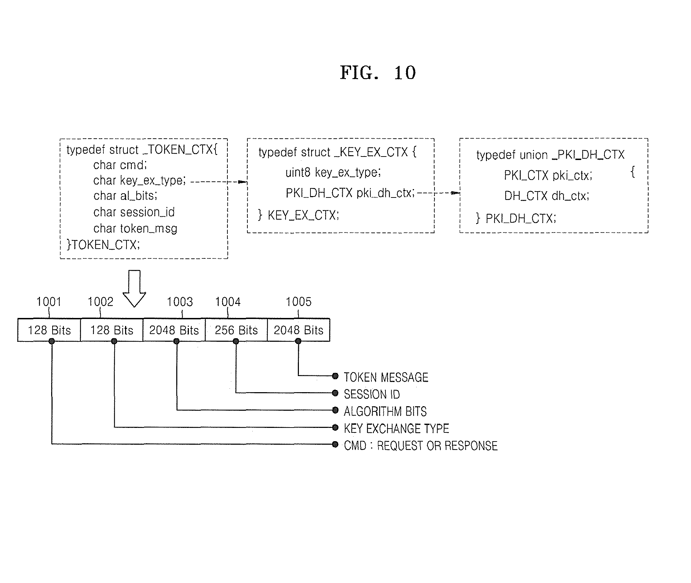

FIG. 10 is a diagram illustrating the format of a session key response token according to an exemplary embodiment of the present invention. Referring to FIG. 10, the session key response token comprises a command field 1001, a key exchange type field 1002, an algorithm bit field 1003, a session identifier field 1004, and a token message field 1005. The session key response token may be defined, for example, using the C language as illustrated in FIG. 10.

A command value of a token transmitted from the second device 6 to the first device 5 during a session between the second device 6 and the first device 5, i.e., a value indicating whether the token is for issuing a request to the first device 5 or for responding to a request issued by the first device 5, is recorded in the command field 1001. Since the session key response token is a token for responding to a request issued by the first device 5, a value indicating that the session key response token is for responding to a request issued by the first device 5 is recorded in the command field 1001.

A value identifying an asymmetric key cipher algorithm used to exchange a public key between the first device 5 and the second device 6, i.e., a value indicating whether a PKI algorithm or a DH algorithm is used to exchange a public key between the first device 5 and the second device 6, is recorded in the key exchange type field 1002. The key exchange type field 1002 may be defined, for example, using the C language as illustrated in FIG. 10 and comprises: a field key_ex_type in which the value indicating whether the public key infrastructure (PKI) algorithm or the Diffie Hellman (DH) algorithm is used to exchange a public key between the first device 5 and the second device 6 is recorded; and a field PKI_DH_CTX in which information specifying how, in the PKI algorithm or the DH algorithm, a public key is exchanged between the first device 5 and the second device 6 is recorded. The field PKI_DH_CTX may be defined, for example, using the C language as illustrated in FIG. 10 and comprises a field PKI_CTX field, in which information specifying how, in the PKI algorithm, a public key is exchanged between the first device 5 and the second device 6 is recorded, and a field DH_CTX field, in which information specifying how, in the DH algorithm, a public key is exchanged between the first device 5 and the second device 6 is recorded.

The size in bits of data blocks that can be processed using the asymmetric key cipher algorithm identified by the value of the key exchange type field 1002 is recorded in the algorithm bit field 1003. A session identifier of the session between the first device 5 and the second device 6 is recorded in the session identifier field 1004. A token message, which is a message needed to be transmitted from the first device 5 to the second device 6 by being carried by the session key request token, is recorded in the token message field 1005. According to the current exemplary embodiment of the present invention, a public key which is used by the second device 6 for ciphering a session key is recorded in the token message field 1005 as a token message.

Referring to FIG. 8, the decipher unit 65 deciphers ciphered source data included in source data cipher text, received by the reception unit 69, with a session key, thereby restoring source data. In detail, the decipher unit 65 deciphers ciphered source data stored in a ciphered data field 706 of the source data cipher text received by the reception unit 69 according to a symmetric key cipher algorithm identified by the values of a cipher algorithm field 701 and a cipher algorithm bit field 702 of the source data cipher text received by the reception unit 69, and determines whether source data has been successfully restored from the ciphered source data with reference to the values of an original data size field 704 and a checksum field 705 of the source data cipher text received by the reception unit 69.

Also, when the reception unit 69 receives source data cipher text, the decipher unit 65 searches the database 62 for a session key corresponding to a session identifier recorded in a session identifier field 703 of the source data cipher text. If a session key corresponding to the session identifier recorded in the session identifier field 703 of the source data cipher text is found in the database 62, then the decipher unit 65 determines whether the discovered session key is valid. If the found session key is determined not to have yet expired, then the decipher unit 65 extracts the found session key from the database 62 and uses the found session key for restoring source data. However, if a session key corresponding to the session identifier recorded in the session identifier field 703 of the source data cipher text does not exist in the database 62, or if a session key corresponding to the session identifier recorded in the session identifier field 703 of the source data cipher text is found in the database 62, but is determined to have already expired, then the decipher unit 65 generates an error message.

The data processing unit 66 processes the source data that is restored by the decipher unit 65. For example, if the source data restored by the decipher unit 65 is compressed, then the data processing unit 66 decompresses the source data.

The second cipher unit 67 ciphers the source data processed by the data processing unit 66 with the session key used by the decipher unit 65 for deciphering the ciphered source data included in the source data cipher text received by the reception unit 69.

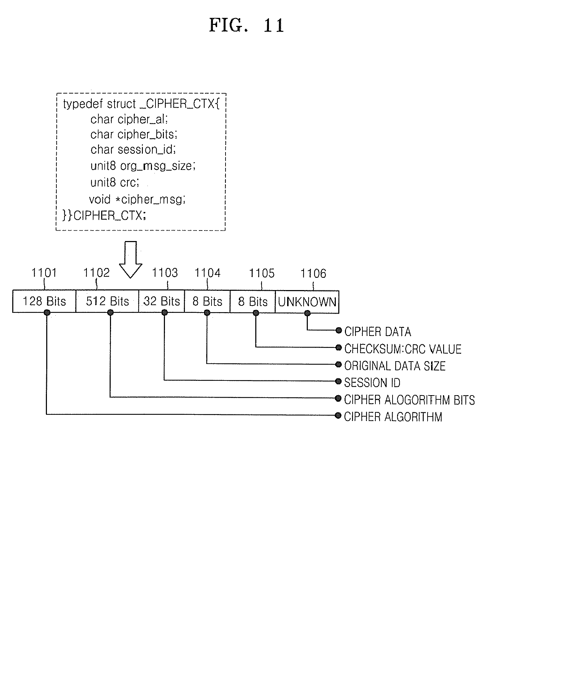

FIG. 11 is a diagram illustrating the format of source data cipher text according to an exemplary embodiment of the present invention. Referring to FIG. 11, the source data cipher text comprises a cipher algorithm field 1101, a cipher algorithm bit field 1102, a session identifier field 1103, an original data size field 1104, a checksum field 1105, and a ciphered data field 1106. The source data cipher text may be defined, for example, using the C language as illustrated in FIG. 11.

A value identifying a symmetric key cipher algorithm used for ciphering source data, e.g., a value indicating that the source data has been ciphered using a Data Encryption Standard (DES) algorithm, is recorded in the cipher algorithm field 1101. The size in bits of data blocks that can be processed using the symmetric key cipher algorithm identified by the value of the cipher algorithm field 1101 is recorded in the cipher algorithm bit field 1102. A session identifier of a session between a first device 5 and a second device 6 is recorded in the session identifier field 1103. The size in bits of the original source data yet to be ciphered by a second cipher unit 67 is recorded in the original data size field 1104. The value of the original data size field 1104 is used later for determining whether the original source data has been successfully restored by the first device 5. A checksum value of a session key is recorded in the checksum field 1105. The checksum value is used for determining whether the session key has been deformed before transmitting the session key from the second device 6 to the first device 5. Ciphered source data needed to be transmitted from the second device 6 to the first device 5 by being carried by the source data cipher text is stored in the ciphered data field 1106.

Referring to FIG. 8, the reception unit 69 receives a session key request token that requests a session key to be used in the session between the first device 5 and the second device 6 from the first device 5. Also, the reception unit 69 receives source data cipher text comprising source data ciphered with a predetermined session key, wherein the predetermined session key is a session key restored from a ciphered session key included in a session key response token transmitted by the transmission unit 610.

The transmission unit 610 transmits a session key response token generated by the session key response token generation unit 64 to the first device 5. Also, the transmission unit 610 transmits an error message generated by the decipher unit 65 to the first device 5. Also, the transmission unit 610 transmits result data cipher text generated by the result data cipher text generation unit 68 to the first device 5.

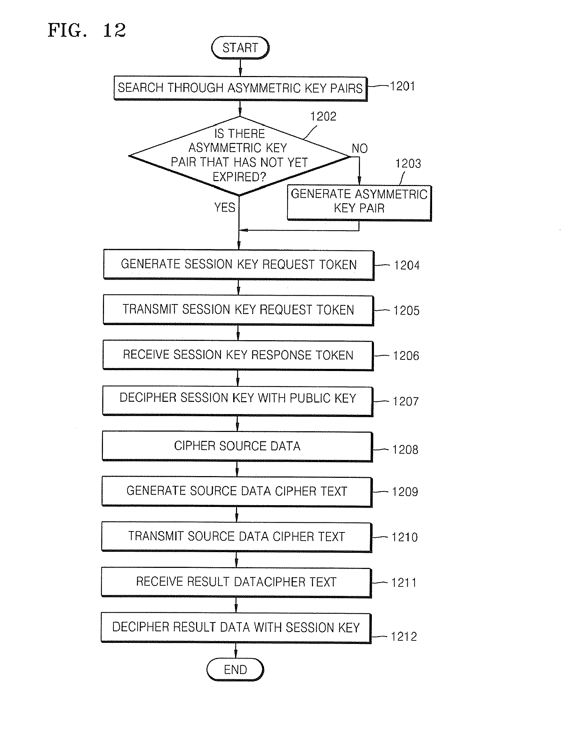

FIG. 12 is a flowchart illustrating a method of securely transmitting data according to an exemplary embodiment of the present invention. The method illustrated in FIG. 12 comprises a plurality of operations sequentially performed by the first device 5 of FIG. 3. Therefore, it is clear that the detailed description of the first device 5 presented above with reference to FIG. 3 can be directly applied to the method illustrated in FIG. 12.

Referring to FIG. 12, in operation 1201, the first device 5 searches through a plurality of asymmetric key pairs that are stored in the database 52 and determines whether each of the asymmetric key pairs is valid.

In operation 1202, if an asymmetric key pair that has not yet expired, and is thus valid, is found in the database 52, then the first device 5 extracts the found asymmetric key pair from the database 52, and the method proceeds to operation 1204. On the other hand, if none of the asymmetric key pairs stored in the database 52 are determined to be valid, then the method proceeds to operation 1203.

In operation 1203, the first device 5 generates an asymmetric key pair.

In operation 1204, the first device 5 generates a session key request token that requests a session key to be used in a session between the first device 5 and a second device 6. In detail, in operation 1204, the first device 5 generates a session key request token comprising a public key in the found asymmetric key pair or in the generated asymmetric key pair.

In operation 1205, the first device 5 transmits the session key request token.

In operation 1206, the first device 5 receives a session key response token in response to the session key request token.

In operation 1207, the first device 5 deciphers a ciphered session key with a secret key in the found asymmetric key pair or in the generated asymmetric key pair, thereby restoring a session key corresponding to a session identifier of the session between the first device 5 and the second device 6.

In operation 1208, the first device 5 ciphers source data to be transmitted to the second device 6 with the restored session key.

In operation 1209, the first device 5 generates source data cipher text comprising the ciphered source data.

In operation 1210, the first device 5 transmits the source data cipher text.

In operation 1211, the first device 5 receives result data cipher text comprising ciphered result data which is obtained by the second device 6 processing the ciphered source data included in the source data cipher text transmitted in operation 1210.

In operation 1212, the first device 5 deciphers the ciphered result data included in the received result data cipher text with the restored session key, thereby restoring result data.

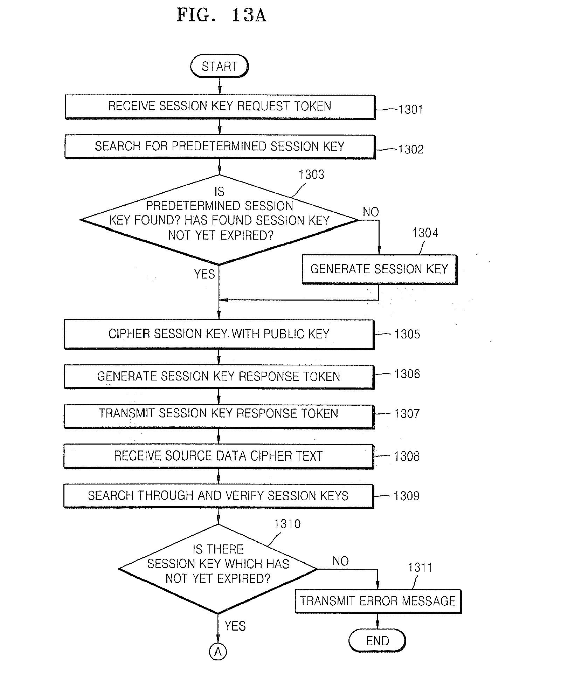

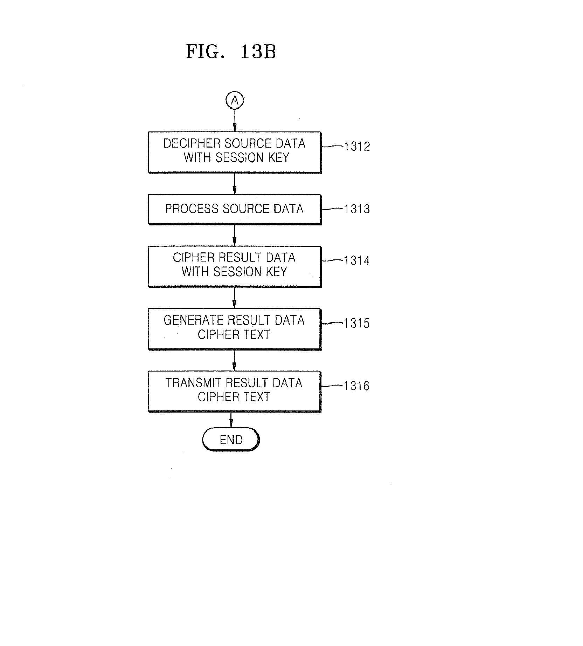

FIGS. 13A and 13B are flowcharts illustrating a method of securely transmitting data according to another exemplary embodiment of the present invention. The method illustrated in FIGS. 13A and 13B comprises a plurality of operations which are sequentially performed by the second device 6 of FIG. 8. Therefore, it is clear that the detailed description of the second device 6 presented above with reference to FIG. 8 can be directly applied to the method illustrated in FIGS. 13A and 13B.

Referring to FIGS. 13A and 13B, in operation 1301, the second device 6 receives from a first device 5 a session key request token that requests a session key to be used in a session between the first device 5 and the second device 6.

In operation 1302, the second device 6 searches the database 62 for a session key corresponding to a session identifier included in the received session key request token, and if a session key corresponding to the session identifier included in the received session key request token is found in the database 62, then the second device 6 determines whether the found session key is valid.

In operation 1303, if a session key is found in operation 1302 and the found session key is determined to be valid, then the second device 6 extracts the found session key from the database 62, and the method proceeds to operation 1305. On the other hand, if a session key corresponding to the session identifier included in the received session key request token does not exist in the database 62, or if a session key corresponding to the session identifier included in the received session key request token is found in the database 62, but the found session key has already expired, and is thus invalid, then the method proceeds to operation 1304.

In operation 1304, the second device 6 generates a session key.

In operation 1305, the second device 6 ciphers the session key found in operation 1302, or the session key generated in operation 1304, with a public key included in the received session key request token.

In operation 1306, the second device 6 generates a session key response token corresponding to the received session key request token. In detail, in operation 1306, the second device 6 generates a session key response token comprising the ciphered session key.

In operation 1307, the second device 6 transmits the session key response token to the first device 5.

In operation 1308, the second device 6 receives source data cipher text comprising ciphered source data which is ciphered with a session key restored from the ciphered session key.

In operation 1309, the second device 6 searches the database 62 for a session key corresponding to a session identifier recorded in a session identifier field 703 of the received source data cipher text. Thereafter, if a session key corresponding to the session identifier recorded in the session identifier field 703 of the received source data cipher text is found in the database 62, then the second device 6 determines whether the found session key is valid.

In operation 1310, if a session key found in operation 1309 has not yet expired, and is thus valid, then the second device 6 extracts it from the database 62, and the method proceeds to operation 1312. However, if a session key corresponding to the session identifier recorded in the session identifier field 703 of the received source data cipher text does not exist in the database 62, or if a session key corresponding to the session identifier recorded in the session identifier field 703 of the received source data cipher text is found in the database 62, but the found session key has already expired, and is thus invalid, then the method proceeds to operation 1311.

In operation 1311, the second device 6 transmits to the first device 5 an error message indicating that a session key corresponding to the session identifier recorded in the session identifier field 703 of the received source data cipher text does not exist in the database 62, or indicating that a session key corresponding to the session identifier recorded in the session identifier field 703 of the received source data cipher text has been found in the database 62, but the found session key has already expired, and is thus invalid.

Referring to FIG. 13B, in operation 1312, the second device 6 deciphers the ciphered source data included in the received source data cipher text with the session key extracted in operation 1310, thereby restoring the predetermined source data.

In operation 1313, the second device 6 processes the restored source data.
In operation 1314, the second device 6 ciphers the processed source data with the session key used by the decipher unit 65, thereby generating ciphered result data.

In operation 1315, the second device 6 generates result data cipher text comprising the ciphered result data.

In operation 1316, the second device 6 transmits the result data cipher text to the first device 5.

Exemplary embodiments of the present invention can be realized as computer-readable code, which is written on a computer-readable recording medium. The computer-readable recording medium may be any type of recording device in which data is stored in a computer-readable manner. Examples of the computer-readable recording medium include, but are not limited to, a ROM, a RAM, a CD-ROM, a magnetic tape, a floppy disc, an optical data storage, and a carrier wave (e.g., data transmission through the Internet).

According to exemplary embodiments of the present invention, it is possible to securely share a session key between two devices that communicate with each other in a peer-to-peer manner by transmitting a public key which is allowed to be exposed externally between the two devices, and particularly, by allowing one of the two devices to cipher a session key with a public key included in a session key request issued by the other device and to transmit the ciphered session key to the other device. Therefore, it is possible for embedded devices to securely communicate with one another in a peer-to-peer manner without the need to acquire a private key from a certificate authority equipped with a centralized security server through a path that is not exposed externally.

In addition, according to exemplary embodiments of the present invention, an asymmetric key algorithm is used for sharing a session key between devices, and then a symmetric key algorithm is used for transmitting data between the devices. Therefore, it is possible to minimize the data security maintenance load of a system. In addition, since the method of the present invention is carried out between two embedded devices without the aid of a certificate authority, it can be freely implemented in embedded devices as a software library without regard to restrictions imposed externally by a certificate authority.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of securely transmitting data to a device comprising:
issuing a request for a session key that is to be used in a session with the device;
restoring the session key by deciphering a ciphered session key that is included in a response to the request;
ciphering data using the restored session key; and
transmitting the ciphered data.

2. The method of claim 1, wherein the issuing a request for the session key comprises issuing a request for the session key by transmitting a request token comprising a public key to be used for ciphering the session key,
wherein the restoring the session key comprises deciphering a ciphered session key, which is ciphered using the public key, and
wherein the ciphered session key is deciphered using a private key corresponding to the public key.

3. The method of claim 2 further comprising generating an asymmetric key pair that comprises the public key and the private key.

4. The method of any preceding claim, wherein the issuing a request for the session key comprises issuing a request for the session key by transmitting a request token comprising a session identifier of the session, and
wherein the restoring the session key comprises restoring a session key corresponding to the session identifier.

5. The method of any preceding claim, further comprising:
receiving ciphered result data which is obtained by processing the ciphered data; and
restoring result data by deciphering the received ciphered result data using the session key.

6. The method of any preceding claim, wherein the session key comprises a symmetric key.

7. An apparatus for securely transmitting data to a device comprising:
a transmission unit (58) which is operable to transmit a request token that requests a session key to be used in a session with the device;
a first decipher unit (54) which is operable to restore the session key by deciphering a ciphered session key that is included in a response token corresponding to the request token; and
a cipher unit (55) which is operable to cipher data using the restored session key,
wherein the transmission unit (58) is configured to transmit the ciphered data.

8. The apparatus of claim 7, wherein the request token comprises a public key which is to be used by the device to cipher the session key, and
wherein the first decipher unit (54) is operable to decipher the ciphered session key using a private key corresponding to the public key.

9. A computer-readable storage medium storing a computer program for executing a method of securely transmitting data to a device, the method comprising:
issuing to the device a request for a session key that is to be used in a session with the device;
restoring the session key by deciphering a ciphered session key that is included in a response to the request;
ciphering data using the restored session key; and
transmitting the ciphered data.

10. A method of securely receiving data from a device comprising:
receiving a request for a session key that is to be used in a session with the device;
transmitting a ciphered session key in response to the request; and
receiving ciphered data which is ciphered using the session key that is restored from the ciphered session key.

11. The method of claim 10 further comprising:
generating the session key in response to the request for a session key; and
ciphering the session key.

12. The method of claim 11, wherein the receiving the request for a session key comprises receiving a request token comprising a public key that is to be used to cipher the session key, and
wherein the ciphering the session key comprises ciphering the session key using the public key that is included in the request token.

13. The method of claim 11, wherein the receiving a request token comprises receiving a request token comprising a session identifier of the session, and
wherein the generating the session key comprises generating a session key corresponding to the session identifier that is included in the request token.

14. The method of any one of claims 10 to 13 further comprising:
determining whether the session key is valid in response to the request for the session key; and
ciphering the session key if the session key is determined to be valid.

15. The method of any one of claims 10 to 14 further comprising restoring data by deciphering the received ciphered data using the session key.

16. An apparatus for securely receiving data from a device comprising:
a reception unit (69) which is operable to receive a request token that requests a session key that is to be used in a session with the device; and
a transmission unit (610) which is operable to transmit a response token comprising a ciphered session key in response to the request token,
wherein the reception unit (69) is operable to receive cipher text comprising ciphered data which is ciphered with the session key that is restored from the ciphered session key that is included in the response token.

17. The apparatus of claim 16 further comprising:
a generation unit (61) which is operable to generate the session key in response to the request token; and
a first cipher unit (63) which is operable to cipher the session key.

18. The apparatus of claim 17, wherein the request token comprises a public key that is to be used to cipher the session key, and
wherein the first cipher unit (63) is operable to cipher the session key using the public key that is included in the request token.

19. A computer-readable storage medium storing a computer program for executing a method of securely receiving data from a device, the method comprising:
receiving a request for a session key that is to be used in a session with the device;
transmitting a ciphered session key in response to the request; and
receiving ciphered data which is ciphered using the session key that is restored from the ciphered session key.
